# EUROPEAN PATENT SPECIFICATION

(11) **EP 3 766 159 B1**
(45) Date of publication and mention of the grant of the patent: **26.10.2022**
(21) Application number: 19716569.9
(22) Date of filing: 13.03.2019
(51) Int. Cl.: H02J 3/32, H02J 7/35, H02J 7/02, H02M 7/797, H02P 21/00

(54) **ENERGY STORAGE SYSTEM**
ENERGIESPEICHERSYSTEM
SYSTÈME DE STOCKAGE D'ÉNERGIE

(30) Priority: 13.03.2018 IT 201800003474
(43) Date of publication of application: 20.01.2021
(73) Proprietor: Future Light S.r.l., 52037 Sansepolcro (IT)
(72) Inventor: CAVALIERI, Lorenzo, 52014 Poppi (IT); MANNESCHI, Piero, 52015 Pratovecchio Stia (IT); MORGIA, Giuseppe Maria, 06016 San Giustino (IT); CORNO, Diego, 20062 Cassano D'Adda (IT); GIOVANARDI, Daniele, 41049 Sassuolo (IT)
(74) Representative: Modiano, Micaela Nadia
(86) International application number: PCT/IB2019/052025
(87) International publication number: WO 2019/175788

(56) References cited:
- WO-A1-2017/037925
- CN-B- 102 158 115
- CHEN W WARREN ET AL: "Active rectifier system using three-phase unfolder and series resonant converters controlled in synchronous rotating frame", 2016 IEEE INTERNATIONAL TELECOMMUNICATIONS ENERGY CONFERENCE (INTELEC), IEEE, 23 October 2016 (2016-10-23), pages 1-7, XP033009632, DOI: 10.1109/INTLEC.2016.7749026 [retrieved on 2016-11-18]

## Description

The present invention relates to an energy storage system that is useful and practical particularly in the field of production, distribution, conversion and storage of electric power, both in the civil and the industrial field. The invention also relates to the use of a variable-frequency three-phase vector machine in an energy storage system.

The energy storage systems (ESS) to which the present invention relates are apparatuses that allow to store the electric power coming from one or more power sources, such as for example the electric distribution grid or a local generator, and to deliver it when required.

It is useful to clarify from the outset that in the present description and in the accompanying claims the expression "energy storage system" is intended to reference in a specific manner an energy storage system as defined by the CEI 0-16 and CEI 0-21 standards approved by the Comitato Elettrotecnico Italiano (Italian Electrotechnical Committee) and in rulings 574/2014/R/eel, 642/2014/R/eel, 360/2015/R/eel and 786/2016/R/eel Resolutions of the Italian Autorita di Regolazione per Energia e Ambiente (Regulatory Authority for Energy and Environment) (ARERA) and in particular as explicitly referenced in "REGOLE TECNICHE PER L'ATTUAZIONE DELLE DISPOSIZIONI RELATIVE ALL'INTEGRAZIONE DI SISTEMI DI ACCUMULO DI ENERGIA ELETTRICA NEL SISTEMA ELETTRICO NAZIONALE" (Technical rules for the application of the provisions related to the integration of electric power storage systems in the national electrical system) issued on 15 June 2017 by the Italian Electric Service Operator (GSE). It is important, therefore, to bear in mind that systems used in emergency conditions (UPS) that begin to operate only upon the interruption of the power supply from the electric grid for reasons independent of the will of the subject who has it available do not fall within the definition of energy storage system.

Currently, energy production is shifting increasingly toward the use of renewable sources and particularly of non-programmable renewable sources (such as for example wind, by means of wind farms, and solar power, by means of photovoltaic systems).

Together with the many known advantages, the use of nonschedulable renewable sources entails technical problems, in particular due to the fact that the power produced by these sources depends on environmental factors (wind, solar radiation, etcetera) that are independent and cannot be controlled. Therefore, in a grid in which at least part of the power is produced by nonschedulable renewable sources there will be times of excessive production, in which the generated electric power is greater than the demand, and times of insufficient production, in which the generated power is lower than the demand and in which it is thus necessary to integrate the production with other type of generators.

In order to obviate this and other drawbacks, so-called energy storage systems (also known by the English term "storage") have been developed which allow to store the energy produced at times of excessive production in order to then deliver it at times of insufficient production.

Energy storage systems can be also connected to the national electric distribution grid, so as to work in a continuous manner in parallel with it, drawing or injecting power in the distribution grid according to the requirements. In this manner, energy storage systems, when connected both to the electric distribution grid and to one or more local generation systems, can help to make the distribution grid more efficient and flexible.

Moreover, energy storage systems can ensure, for short periods, continuity in the supply of power even in the event of a blackout of the electric distribution grid or if the power demand exceeds the power made available by the grid.

Energy storage systems of the known type comprise a storage assembly, i.e., the part of the apparatus designed to store energy, and a conversion assembly, i.e., the part of the apparatus that converts the electric current in transit from the distribution grid (or from the local generators) toward the storage assembly or vice versa.

Generally, the storage assembly comprises one or more batteries, while the conversion assembly comprises at least one inverter and/or a current rectifier in order to convert the current from direct to alternating current or vice versa and one or more electronic filters to eliminate the unwanted frequency bands.

In energy storage systems of the known type there is also control electronics to manage the conversion, delivery and absorption functions.

It should be noted that in these energy storage systems of the known type the conversion assembly is normally constituted by single-phase electric devices interconnected in a three-phase configuration.

Energy storage systems of the known type, although very useful and practical, have some limitations.

First of all, energy storage systems of the known type are systems that are intrinsically scarcely flexible and versatile.

In particular, energy storage systems of the known type are generally designed for low power levels (below 11 kW) and their structure cannot be adapted for higher power levels.

Moreover, the presence of single-phase components interconnected in a three-phase configuration makes energy storage systems of the known type unstable already at medium power levels and practically unmanageable at high power levels.

Another drawback of energy storage systems of the known type is that they cannot be used for fast electric charging systems that require high power levels (225 kW in the versions currently being developed).

Vice versa, known energy storage systems adapted for high power levels are characterized by large bulk, complex structures and high production and management costs and their structure makes them unsuitable to be adapted for low power levels.

Another drawback of energy storage systems of the known type is that they do not allow frequency adjustment.

Another drawback of energy storage systems of the known type is that a data-side physical connection to the control electronics is required in order to be able to connect multiple power generators to them.

Moreover, energy storage systems of the known type have a complex structure in which the control electronics is fragmented in different components mutually connected by a complex connection web that make the system fragile and difficult to maintain. Moreover, replacing a single component entails the complete reconfiguration of the entire system.

Examples of energy storage systems are given in WO 2017/037925 Al, CN 102158115 B, as well as in an article by Warren Chen and Regan Zane, entitled "Active Rectifier System Using Three-Phase Unfolder and Series Resonant Converters Controlled in Snychronous Rotating Frame" (DOI: 10.1109/ INTLEC.2016.7749026).

The aim of the present invention is to overcome the limitations of the background art described above, devising an energy storage system that is more versatile and at the same time more stable, efficient and safe if compared with the background art.

Within this aim, an object of the present invention is to provide an energy storage system that can be configured both for high power levels and for low power levels.

Another object of the invention is to provide an energy storage system that allows frequency adjustment.

Another object of the invention is to provide an energy storage system that can be used for fast electric charging systems that require high power levels.

Another object of the invention is to provide an energy storage system that is easy to maintain and allows easy replacement of a single component.

An additional object of the invention is to provide an energy storage system that allows to easily connect multiple generators.

Another object of the invention is to provide an energy storage system that is usable both on-grid (connected to the electric distribution grid) and off-grid (disconnected from the electric distribution grid).

This aim and these and other objects which will become better apparent hereinafter are achieved by an energy storage system connectable to a power supply source for the supply of electric power and comprising:
- a storage assembly for storing at least part of the power supplied by said power supply source and comprising at least one electric charge storage unit and
- a conversion assembly, interposed between said power supply source and said storage assembly, for the conversion of an electric current in transit between said power supply source and said storage assembly,
characterized in that said conversion assembly comprises:
- a variable-frequency three-phase vector machine consisting of a driver for vector control of sensorless field-oriented motors which comprises a transistor bridge connected to capacitors, said variable-frequency three-phase vector maching being configured to convert bidirectionally the electric current that circulates between said power supply source and said storage assembly, delivering or absorbing selectively active power, inductive reactive power and capacitive reactive power;
- a filter assembly, arranged between the three-phase vector machine and the power supply source, for harmonics management, said filter assembly comprising, in series, from the power supply source toward the three-phase vector machine: a three-phase low pass filter of the EMI type, a line choke and a sinusoidal filter, said sinusoidal filter being configured to resonate at the switching frequency of the three-phase vector machine;
- an electronic control system, which controls at least said three-phase vector machine in order to vary one or more electrical parameters of said electric current, as a function of one or more electrical parameters detected by a plurality of detection devices functionally connected to said electronic control system;
at least said storage assembly, said conversion assembly and at least one of said detection devices being functionally connected by means of a bidirectional connection apparatus for the passage of electric current and of data.

Further characteristics and advantages of the present invention will become better apparent from the description of a preferred but not exclusive embodiment of an energy storage system, illustrated by way of non-limiting example with the aid of the accompanying drawings, wherein:
Figure 1 is a block diagram of an energy storage system according to the invention;
Figure 2 is a schematic view of a portion of the energy storage system according to the invention;
Figure 3 is a block diagram of a possible embodiment of an energy storage system according to the invention in the on-grid condition;
Figure 4 is a block diagram of a possible embodiment of an energy storage system according to the invention in the off-grid condition.

With reference to the figures, the energy storage system, generally designated by the reference numeral 10, can be connected to a power supply source for the supply of power R, such as for example the national electric distribution grid or an electric grid comprising one or more power generators or a single generator or another energy storage system.

As will be clearer hereinafter, the energy storage system 10 is optionally connectable also to one or more user devices U2 and/or to one or more local power generators G2, such as for example wind power or photovoltaic generator apparatuses.

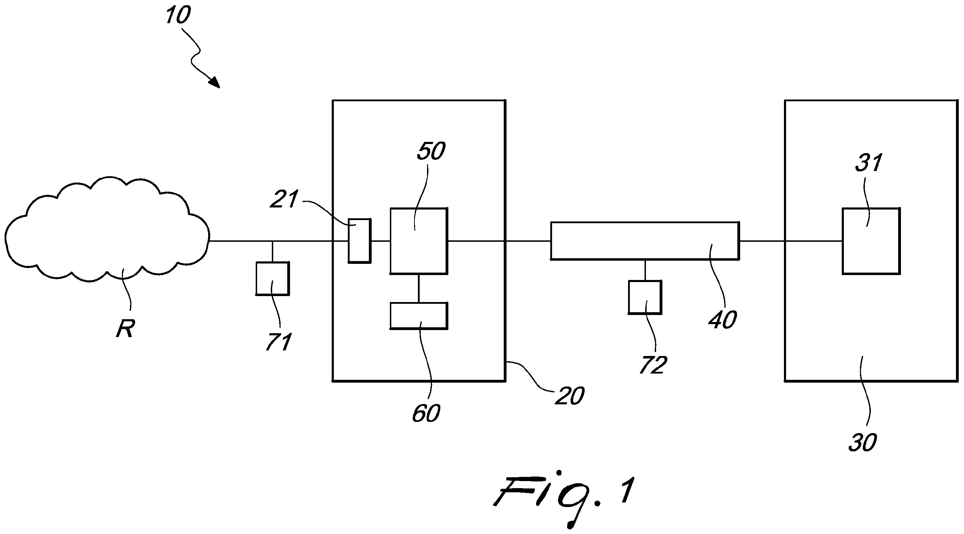

In its general features (shown in the block diagram of Figure 1), the energy storage system 10 comprises a storage assembly 30 for storing at least part of the power supplied by the power supply source R and a conversion assembly 20, interposed between the power supply source R and the storage assembly 30, for the conversion of an electric current i in transit between the power supply source R and the storage assembly 30.

It is useful to specify that conversion of an electric current is understood here, in a fully general manner, as the variation of one or more characteristics of said current (for example variation of the voltage and/or intensity and/or frequency and/or phase shift and/or transformation from alternating to direct current or vice versa).

In greater detail, the storage assembly 30 comprises at least one electric charge storage unit 31, such as for example one or more lead-acid or lithium batteries or other types of devices suitable to store energy.

The storage assembly 30 comprises furthermore all those electrical and electronic devices, known in the art, that are necessary to manage the charging, discharging, monitoring and safety of the charge storage units 31.

In particular, in the preferred embodiment, the storage assembly 30 comprises an electronic device 33 for managing the charge of the charge storage units 31, functionally connected to the electronic control system 60 which will be described hereinafter and configured so as to monitor and act actively to optimize the charge, the discharge and to maximize the life of the charge storage units. This electronic charge management device 33 comprises one or more devices for detecting the measurement of current and voltage at the charge storage units 31.

According to the invention, the conversion assembly 20 comprises a variable-frequency three-phase vector machine 50 configured to convert bidirectionally the electric current i that circulates between the power supply source R and the storage assembly 30 - delivering or absorbing selectively active power, inductive reactive power and capacitive reactive power - and an electronic control system 60, which controls at least said three-phase vector machine 50 in order to vary one or more electrical parameters of the electric current i, as a function of one or more electrical parameters detected by a plurality of detection devices 71, 72 functionally connected to said electronic control system 60.

The expression electrical parameter is understood to reference herein any measurable characteristic of the current or of the electric circuit in which the current flows, such as frequency, current intensity, voltage, phase shift, etcetera.

As already mentioned, the variable-frequency three-phase vector machine 50 is configured to convert bidirectionally the electric current i (i.e, for example to vary the voltage and/or the frequency and/or the intensity and/or the phase shift of the current i originating from the power supply source R and directed toward the storage assembly 30 or vice versa, and/or transform said current from alternating to direct and vice versa). In practice, the three-phase vector machine 50 acts as a bidirectional converter.

The variable-frequency three-phase vector machine 50 (from now on simply "three-phase vector machine") to which reference is made in the present invention is of the type of a driver for vector control of sensorless field-oriented motors, i.e., of the type known in the art with the acronym FOC (field-oriented control) and more precisely a machine for "sensorless field-oriented control, i.e. for the control of electric motors.

More precisely, the variable-frequency three-phase vector machine 50 to which reference is made in the present invention is a device of the type known as AFE (active front end).

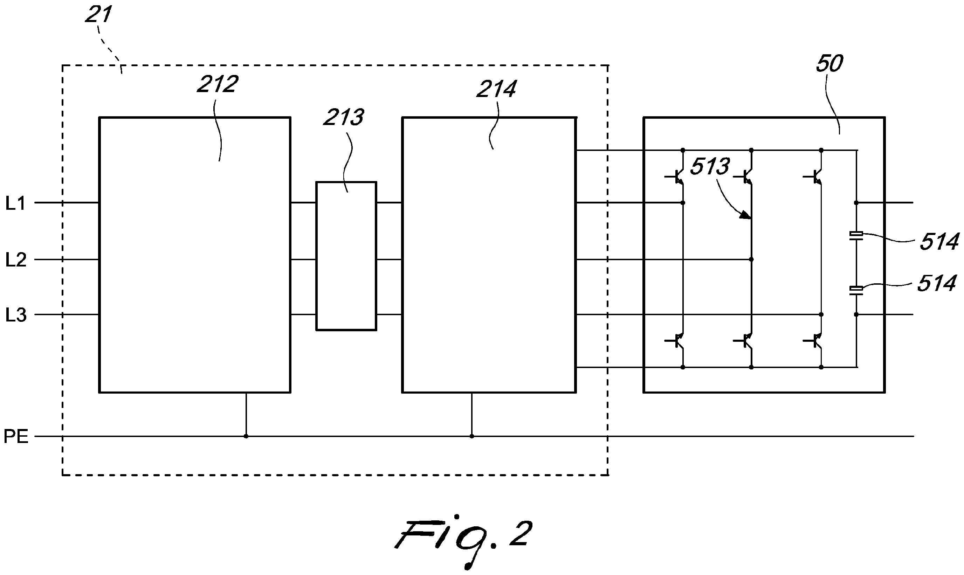

Figure 2 shows schematically an embodiment according to the invention, connected to a filter assembly 21 that will be described hereinafter, of the three-phase vector machine 50 comprising a transistor bridge 513 connected to capacitors 514.

It is important to stress that in the background art these three-phase vector machines 50 are used in a completely different field with respect to the present invention and with different functions. In fact, in the background art, these variable-frequency three-phase vector machines are used for controlling brushless electric motors and configured to vary the frequency of a three-phase electric current, generally between 0 and 800 Hz.

One of the particularities of the invention resides in fact in the use of a three-phase vector machine 50, of the type described herein, in an energy storage system 10 for the conversion and control of a substantially constantfrequency three-phase current.

In practice, the three-phase vector machine 50 is capable of acting actively on the four quadrants of the Cartesian plane (i.e, the four quadrants of the Gaussian plane usually used in the art to represent sinusoidal currents) by absorbing or delivering selectively active power, inductive reactive power and capacitive reactive power, so as to vary the electrical parameters of the current i in both directions, under the control of an electronic control system 60.

To this end, in fact, the conversion assembly 20 also comprises an electronic control system 60, which controls at least said three-phase vector machine 50 in order to vary one or more electrical parameters of the electric current i, as a function of one or more electrical parameters detected by a plurality of detection devices 71, 72 functionally connected to the electronic control system 60.

In practice, the variable-frequency three-phase vector machine 50 is controlled by the electronic control system 60 in which software is installed which is configured to process data relating to the electrical parameters, detected by the detection devices 71, 72 and to send control signals as a function of said electrical parameters, according to appropriate mathematical functions.

In this manner the three-phase vector machine 50 is capable of acting in feedback on the current i circulating in the energy storage system 10, adjusting its electrical parameters.

For example, droop functions can be implemented in the software installed in the electronic control system. In this manner, by virtue of the droop functions and the characteristics of the three-phase vector machine 50 the conversion assembly 20 is capable of controlling the electric power on the four quadrants of the Cartesian plane, thus being able to control and adjust active power, inductive reactive power and capacitive reactive power.

It should be noted that by virtue of the characteristics described above, the energy storage system is capable of generating autonomously a virtual electric grid.

Going back in greater detail to the elements described and shown, the detection devices 71, 72 can comprise both analog and digital sensors for detecting electrical parameters, and in general any type of device known in the art for measuring electrical quantities, optionally even integrated in other components.

For the sake of clarity, in the figures only two blocks showing the detection devices 71, 72 are shown schematically, it being understood that the detection devices can be various, some of which, for example, are integrated in the conversion assembly 20 and in the storage assembly, all functionally connected to the electronic control system.

In the preferred embodiment, the detection devices 71, 72 comprise at least one digital wattmeter 71 arranged between the three-phase vector machine 50 and the power supply source R in order to monitor the current i in transit between the three-phase vector machine 50 and the power supply source R.

Even more preferably, the detection devices 71, 72 also comprise a plurality of other detection devices, positioned between the three-phase vector machine 50 and the storage assembly, for example integrated in said storage assembly 30, in the bidirectional connection apparatus 40 and in the multiple bidirectional conversion assembles 51, 52, 53, 54 that will be described hereinafter.

For the sake of clarity, it is specified that the expression "functionally connected" is understood to mean connected so as to be able to exchange at least one signal.

According to the invention, at least the storage assembly 30, the conversion assembly 20 and one of said detection devices 72 are functionally connected by means of a bidirectional connection apparatus 40 for the concurrent flow of the electric current i and of data.

In the preferred embodiment, said bidirectional connection apparatus 40 comprises a direct-current bus for the flow of current and data by means of a power-line system, i.e, a PLC (power-line communication) bus. Even more preferably, said direct-current bus is of the "EtherCAT" type.

Also in the preferred embodiment, all the detection devices 71, 72 (as well as the electronic device 33 for managing the charge and all the other electronic elements that will be described hereinafter) are functionally connected to the conversion assembly 20, and more precisely to the electronic control system 60, by means of the direct-current bus.

Moreover, preferably, the bidirectional connection apparatus 40 comprises a bidirectional DC/DC converter 41 for varying the voltage of the current that circulates between the conversion assembly 20 and the storage assembly 30; in this manner it is possible, for example, to use electric charge storage units 31 with different nominal voltages with respect to the voltage in output from the conversion assembly 20.

These characteristics of the invention, furthermore, make it possible to connect a fast charging system or, for example, to charge directly an apparatus (such as an electric car) by adapting the output voltage of the bidirectional DC/DC converter 41 to the voltage required by the apparatus to be charged.

Conveniently, the conversion assembly 20 also comprises a filter assembly 21, arranged between the three-phase vector machine 50 and the power supply source R, for harmonics management.

In greater detail, in the embodiment according to the invention (with particular reference to Figure 2, which shows a layout of the filter assembly 21 connected to the three-phase vector machine 50) the filter assembly 21 comprises, in series, from the source R toward the three-phase vector machine 50: a three-phase low-pass filter 212 of the EMI (ElectroMagnetic Interference) type; a line choke 213; a sinusoidal filter 214.

The sinusoidal filter 214 is configured to resonate at the switching frequency of the three-phase vector machine 50; in this manner the reactive power can be canceled selectively between the filter assembly 21 and the three-phase vector machine 50.

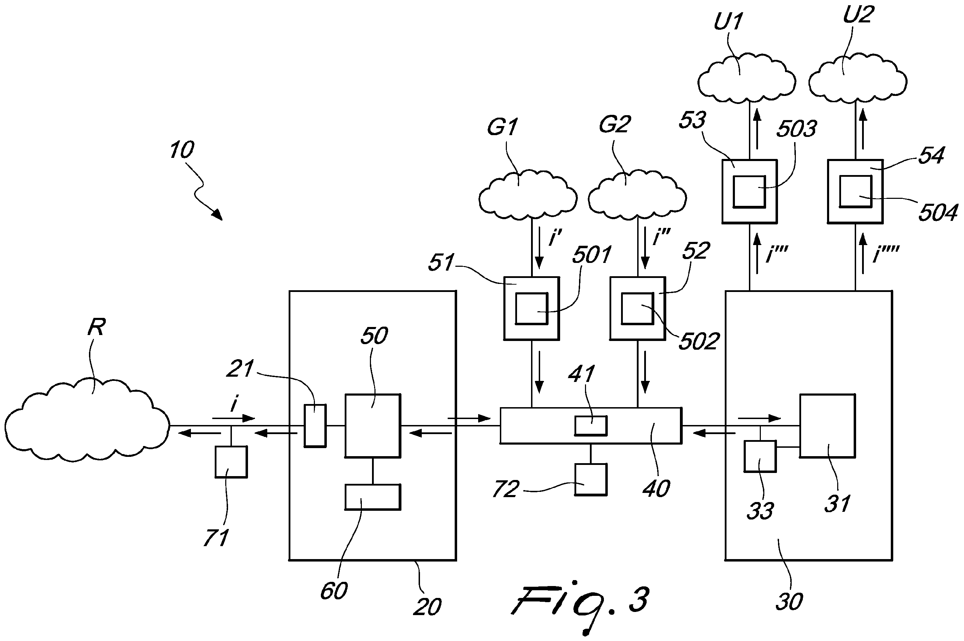

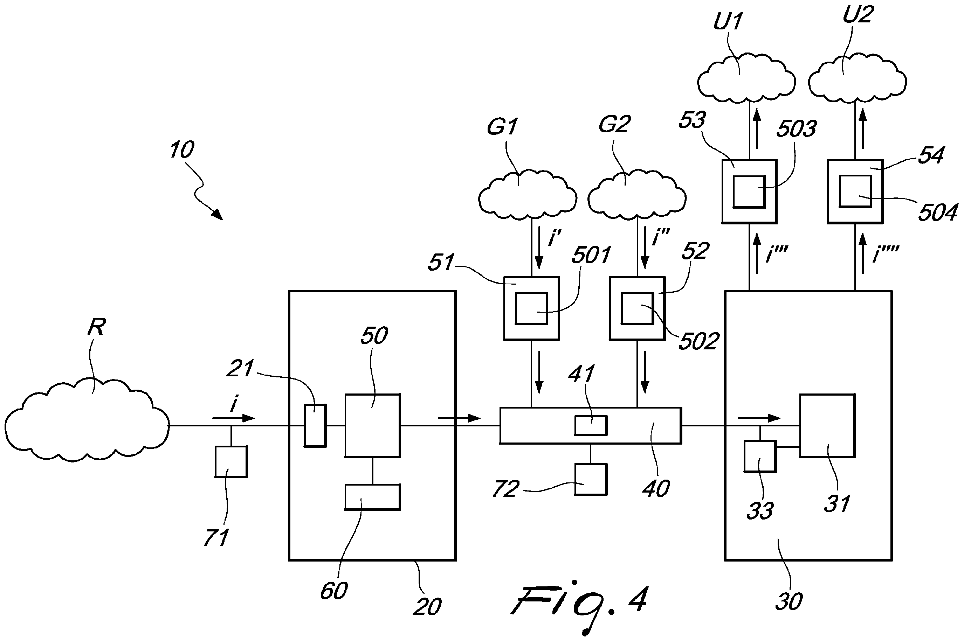

Preferably, as shown in Figures 3 and 4, the energy storage system 10 comprises one or more primary auxiliary conversion assemblies 53, 54 functionally connected to the storage assembly 30, adapted to be connected to one or more user devices U1, U2.

Each one of the user devices U1, U2 is any electric grid or an apparatus that absorbs electric energy. Each one of the user devices U1, U2, by connecting to one of the primary auxiliary conversion assemblies 53, 54, is in practice supplied electrically by the energy storage system 10.

Each one of the primary auxiliary conversion assemblies 53, 54 comprises a three-phase vector machine 503, 504 of the same type and with the same characteristics as the one comprised in the storage assembly 30, configured to convert an electric current (i‴, iʺʺ) that circulates from the storage assembly toward the user devices U1, U2.

Depending on the type of user device, each one of the primary auxiliary conversion assemblies can be configured to convert the direct current into alternating current or from direct current to direct current (adjusting other electrical parameters, such as the voltage).

In practice, the variable-frequency vector machines 503, 504 comprised in the primary auxiliary conversion assemblies 53, 54 act as a unidirectional converter for the electric current that is supplied by the storage assembly to the user devices U1, U2.

Again with reference to Figures 3 and 4, the energy storage system 10 comprises optionally also one or more secondary auxiliary conversion assemblies 51, 52, functionally connected to the conversion assembly 20 and to the storage assembly 30 by means of the bidirectional connection apparatus 40, adapted to be connected to one or more local power generators G1, G2.

The local power generators G1, G2 can be constituted, for example, by a photovoltaic or wind or hydroelectric generator apparatus or by any other type of electric generator. In practice, each local power generator G1, G2, by connecting to a secondary auxiliary conversion assembly 51, 52, supplies electric power to the energy storage system 10 that is stored in the storage assembly 30.

Each one of the secondary auxiliary conversion assemblies 51, 52 comprises a three-phase vector machine 501, 502 of the same type and with the same characteristics as the one comprised in the storage assembly 20, configured to convert the electric current i', i" that circulates from said local power generators G1, G2 toward the bidirectional connection apparatus 40.

According to the type of local generator G1, G2, each one of the secondary auxiliary conversion assemblies 51, 52 can be configured to convert the current from alternating to direct or from direct to direct (adjusting other electrical parameters, such as the voltage).

In practice, the variable-frequency three-phase vector machines 501, 502 comprised in the secondary auxiliary conversion assemblies act as a unidirectional converter for the electric current that is injected by the local power generators G1, G2 into the bidirectional connection apparatus 40.

Preferably, each one of the primary auxiliary conversion assemblies 53, 54 and of the secondary auxiliary conversion assemblies 51, 52 also comprises at least one detection device which is functionally connected to the conversion assembly 20 and more precisely to the electronic control system 60.

Optionally, each one of the primary auxiliary conversion assemblies 53, 54 and of the secondary auxiliary conversion assemblies 51, 52 also comprises an auxiliary electronic control system, functionally connected to the conversion assembly 20, and more precisely to the electronic control system 60.

Advantageously, the energy storage system 10 can be configured in two conditions:
- an on-grid condition, shown in Figure 3, in which the power supply source R is an electrical distribution grid which is also capable of absorbing electric power, such as the national electric distribution grid (a state commonly termed "on-grid") or a system of generators interconnected by a grid of the "SMART GRID" type (i.e., a grid capable of absorbing and optionally storing power), and in which the three-phase vector machine 50 is configured to convert bidirectionally the electric current i in transit between the power supply source R and the bidirectional connection apparatus 40;
- an off-grid condition, shown in Figure 4, in which the power supply source R is unable to absorb power (being for example constituted by one or more local generators not capable of absorbing power and not connected to a grid of the "SMART GRID" type, or being totally absent) and in which the variable-frequency three-phase vector machine 50 is configured to convert unidirectionally the electric current i optionally in transit from said power supply source R toward the bidirectional connection apparatus 40.

In other words, the off-grid condition is provided when the energy storage system 10 is in the state commonly termed "off-grid", except in cases where the power supply source R is constituted by a system capable of absorbing power (such as for example a system of generators interconnected by a grid of the "SMART GRID" type).

A particular case of off-grid condition is provided when the energy storage system 10 is not connected to the power supply source R (or there is an interruption of the delivery of electric power from it).

In the off-grid condition, the energy storage system 10 generates in practice a virtual grid, drawing power from the storage assembly 30 and/or from the local generators G1, G2 and delivering it to the user devices U1, U2.

The transition from the on-grid condition to the off-grid condition and vice versa is provided by the electronic control system 60 as a function of one or more electrical parameters detected by one or more of the detection devices 71, 72, via control signals send to the three-phase vector machine 50.

In this manner the energy storage system 10 is capable of passing from one condition to the other, in a substantially instantaneous manner, without interruptions in operation, ensuring the continuity in the delivery of current to the user devices U1, U2.

In practice, in the on-grid condition, the energy storage system 10 is capable of managing and adjusting the flow of electric power from the electric distribution grid to the storage assembly 30 (and from the latter, optionally, to the user devices U1, U2) or from the local power generators G1, G2 and/or from the storage assembly 30 toward the electric distribution grid, as function for example of the power required by the user devices U1, U2.

Advantageously, the functional connections from and toward the electronic control system 60 are provided by means of high-speed data connection and preferably with the "EtherCAT" protocol.

Even more preferably, the functional connection is provided so that a physical address is associated with each element functionally connected to the electronic control system 60. Advantageously, all the elements are functionally connected to the electronic control system 60 in parallel.

In this manner it is possible to replace the individual components without having to reconfigure the whole system.

Moreover, in the preferred embodiment, all the components (such as for example the detection devices 71, 72 the three-phase vector machines 50, 501, 502, 503, 504, the electric charge storage units 31, etcetera) are provided with an electronic control device adapted to process and send to the electronic control system 60 data related to said component.

In this manner, the electronic control system 60 is capable of controlling all the components of the energy storage system in an extremely fast and efficient manner.

According to an optional and advantageous characteristic, the three-phase vector machine 50 is accommodated in a box-like body and the electronic control system 60 comprises an electronic controller which is external to said box-like body and connected thereto by means of a connecting cable.

Also according to this characteristic, both the external controller and the box-like body comprise a part of the electronic control system 60 and the corresponding software, which is configured to control autonomously at least the variable-frequency three-phase vector machine 50.

In this manner, a redundancy of the control system is provided which allows to control the energy storage system 10 even in the event of disconnection of the external controller or a failure of the portion of the electronic control system 60 comprised in the box-like body.

Obviously, the energy storage system also comprises all those other elements which, according to the background art, are necessary for the operation and safety of an energy storage system and which, for the sake of brevity, are not described herein since they are per se known (such as for example filters, disconnecting switches, safety devices, breakers, etcetera).

The operation of the energy storage system 10, although clear and evident from what has been described, is further exemplified hereinafter with reference to the preferred embodiment shown in Figures 3 and 4.

In the on-grid condition (Figure 3), the energy storage system 10 is connected, for example, to the national distribution grid (which in this case constitutes the power supply source R) capable of both delivering and absorbing electric power.

When there is the need to absorb power from the power supply source R (for example when the power required by the user devices U1, U2, is higher than that delivered by the local power generators G1, G2 optionally connected, or in any case there is the need to charge the electric charge storage units 31), the electric power passes, in the form of current i, first through the conversion assembly 20 and then through the bidirectional connection apparatus 40 (more precisely through the direct-current bus), to the storage assembly 30, being stored in the charge storage units 31. If one or more local power generators Gl, G2 are present and operational, the power delivered by them also passes through the bidirectional connection apparatus 40 (more precisely through the direct-current bus) to the storage assembly 30. The electric power is supplied, if necessary, by the storage assembly 30 toward the user devices U1, U2.

Vice versa, when there is the need to deliver power toward the power supply source R (for example when the power required by the user devices U1, U2 is lower than that delivered by the local power generators G1, G2 optionally connected, or in any case there is the need to discharge the electric charge storage units 31), the electric power passes from the storage assembly 30 (and/or from the local power generators G1, G2 optionally connected), first through the bidirectional connection apparatus 40 (more precisely, through the direct-current bus), and then through the conversion assembly 20, to the power supply source R.

In all cases, the conversion assembly 20 converts the current i in transit, adjusting its electrical parameters, by means of the three-phase vector machine 50 that delivers or absorbs appropriately active power and/or reactive power (for example converting the current i coming from the power supply source R toward the direct-current bus from alternating to direct current and, if necessary, performing a phase correction, or, vice versa, by converting the current i coming from the direct-current bus toward the power supply source R from direct to alternating current, making it compliant with the parameters required by the distribution grid).

The operations performed by the three-phase vector machine 50 are controlled by the electronic control system 60 as a function of electrical parameters detected by the detection devices 71, 72 both upstream and downstream of the three-phase vector machine 50 (the detections can be performed by detection devices integrated in the conversion assembly). In this manner the conversion assembly is capable of both acting in feedback and reacting promptly in the event of a variation of one or more electrical parameters, keeping the energy storage system safe and efficient.

For example, if the electronic control system 60 detects, by means of a detection device 72, a lowering of the frequency below a preset threshold (with subsequent rise of the reactive power) in the current i originating from the power supply source R, said electronic control system 60 commands the three-phase vector machine 50 to deliver power so as to compensate the rise of relative power so as to correct the current and raise the frequency up to a preset value.

The power necessary for said supply is provided by the storage assembly 30.

The same functions performed by the conversion assembly 20 can be performed by the individual primary auxiliary conversion assemblies 53, 54 and secondary auxiliary conversion assemblies 51, 52, for the currents in transit, respectively, toward the user devices U1, U2 and from the local power generators G1, G2.

The operation of the energy storage system 10 in the off-grid condition is the same, with the difference that the flow of electric power toward the power supply source R is not allowed and thus the three-phase vector machine 50 operates as a unidirectional converter.

In the particular case of an off-grid condition in which no distribution grid is connected to the energy storage system 10, the conversion assembly 20 is capable of generating a virtual grid by using the power stored in the storage assembly 30 and adjusting conveniently the electrical parameters.

This allows, among other things, to connect multiple energy storage systems (even of a different type with respect to the present invention) in parallel.

Moreover, it should be noted that since the adjustments occur on the basis of electrical parameters measured on the current, it is possible to connect multiple local power generators to the energy storage system 10 without connecting them on the data side.

In this respect, it should be noted that in practice any type of power supply source R (be it the electrical distribution grid or another energy storage system) is "seen" by the conversion assembly 20 as "a load".

Finally, it is important to stress that for example in the event of a blackout or disconnection of the power supply source R, the energy storage system 10 is capable of passing to the off-grid condition in an automatic manner and practically in real time, since said transition occurs by virtue of commands sent by the electronic control system 60 to the three-phase vectorial machine 50, as a function of detections performed by one or more detection devices 71, 72.

In practice it has been found that the energy storage system according to the present invention achieves the intended aim and objects, since it allows to provide an energy storage system that is more versatile and at the same time more stable, efficient and safe if compared with the background art.

Another advantage of the energy storage system according to the invention resides in that it allows frequency adjustment.

A further advantage of the energy storage system according to the invention resides in that it can be configured both for high power levels and for low power levels.

Another advantage of the energy storage system according to the invention resides in that it can be used for fast electric charging systems that require high power levels.

A further advantage of the energy storage system according to the invention resides in that it is easy to maintain and allows easy replacement of an individual component.

Another advantage, of the energy storage system according to the invention resides in that it allows to connect multiple generators easily, without requiring data side wiring.

Another advantage of the energy storage system according to the invention resides in that it is usable both on-grid (connected to the electric distribution grid) and off-grid (disconnected from the electric distribution grid).

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An energy storage system (10), connectable to a power supply source (R) for the supply of electric power and comprising:
- a storage assembly (30) for storing at least part of the power supplied by said power supply source (R) and comprising at least one electric charge storage unit (31) and
- a conversion assembly (20), interposed between said power supply source (R) and said storage assembly (30), for the conversion of an electric current (i) in transit between said power supply source (R) and said storage assembly (30),
**characterized in that** said conversion assembly (20) comprises:
- a variable-frequency three-phase vector machine (50) consisting of a driver for vector control of sensorless field-oriented motors which comprises a transistor bridge (513) connected to capacitors (514), said variable-frequency three-phase vector machine (50) being configured to convert bidirectionally the electric current (i) that circulates between said power supply source (R) and said storage assembly (30), delivering or absorbing selectively active power, inductive reactive power and capacitive reactive power;
- a filter assembly (21), arranged between the three-phase vector machine (50) and the power supply source (R), for harmonics management, said filter assembly (21) comprising in series, from the power supply source (R) toward the three-phase vector machine (50): a three-phase low-pass filter (212) of the EMI type, a line choke (213) and a sinusoidal filter (214), said sinusoidal filter (214) being configured to resonate at the switching frequency of the three-phase vector machine (50);
- an electronic control system (60), configured to control at least said three-phase vector machine (50) in order to vary one or more electrical parameters of said electric current (i), as a function of one or more electrical parameters detected by a plurality of detection devices (71, 72) functionally connected to said electronic control system (60);
at least said storage assembly (30), said conversion assembly (20) and at least one of said detection devices (72) being functionally connected by means of a bidirectional connection apparatus (40) for the passage of electric current (i) and of data.

2. The energy storage system (10) according to claim 1 or 2, **characterized in that** said bidirectional connection apparatus (40) comprises a direct-current bus for the flow of current and data by means of power line communication.

3. The energy storage system according to one or more of the preceding claims, **characterized in that** it can be configured in two conditions:
- an on-grid condition, in which the power supply source (R) is an electrical distribution grid which is also capable of absorbing electric power and in which said three-phase vector machine (50) is configured to convert bidirectionally the electric current (i) in transit between said power supply source (R) and said bidirectional connection apparatus (40);
- an off-grid condition, in which said power supply source (R) is unable to absorb power and in which said three-phase vector machine (50) is configured to convert unidirectionally the electric current (i) in transit from said power supply source (R) toward said bidirectional connection apparatus (40);
the transition from said on-grid condition to said off-grid condition and vice versa being provided by said electronic control system (60) as a function of one or more electrical parameters detected by one or more of said detection devices (71, 72).

4. The energy storage system (10) according to one or more of the preceding claims, **characterized in that** said bidirectional connection apparatus (40) comprises a bidirectional DC/DC converter (41) for varying the voltage of the current that circulates between the conversion assembly (20) and the storage assembly (30).

5. The energy storage system (10) according to one or more of the preceding claims, **characterized in that** it comprises one or more primary auxiliary conversion assemblies (53, 54), which are functionally connected to said storage assembly (30) and are adapted to be connected to one or more user devices (U1, U2); each one of said primary auxiliary conversion assemblies (53, 54) comprising a three-phase vector machine (503, 504) of the type of a drive for the vector control of sensorless field-oriented motors which comprises a switching bridge with active semiconductors, configured to convert an electric current (i‴, iʺʺ) that circulates from said storage assembly toward said user devices (U1, U2).

6. The energy storage system (10) according to one or more of the preceding claims, **characterized in that** it comprises one or more secondary auxiliary conversion assemblies (51, 52), functionally connected to said conversion assembly (20) and to said storage assembly (30) by means of said bidirectional connection apparatus (40), adapted to be connected to one or more local power generators (G1, G2); each one of said secondary auxiliary conversion assemblies (51, 52) comprising a three-phase vector machine, which is configured to convert an electric current (i', i") that circulates from said local power generators (G1, G2) toward said bidirectional connection apparatus (40).

7. The energy storage system (10) according to one or more of the preceding claims, **characterized in that** said three-phase vector machine (50) is accommodated in a box-like body and said electronic control system (60) comprises an electronic controller which is external to said box-like body and is connected to said box-like body by means of a connecting cable; both said external controller and said box-like body each comprising a part of said electronic control system (60) configured to control autonomously at least the three-phase vector machine (50).

8. The energy storage system (10) according to one or more of the preceding claims, **characterized in that** said plurality of detection devices (71, 72) comprises a digital wattmeter (71) which is located between said three-phase vector machine (50) and said power supply source (R) in order to monitor the current (i) in transit between said three-phase vector machine (50) and said power supply source (R).

9. The energy storage system (10) according to one or more of the preceding claims, **characterized in that** the functional connections from and toward said electronic control system (60) are provided with the EtherCAT protocol.

## Patentansprüche

1. Ein Energiespeichersystem (10), verbindbar mit einer Stromquelle (R ) für die Zufuhr von elektrischem Strom und Folgendes umfassend:
- eine Speicheranordnung (30) zum Speichern mindestens eines Teils des Stroms, der von der Stromquelle (R) zugeführt wird, und mindestens eine Speichereinheit (31) für elektrische Ladung umfassend, und
- eine Umwandlungsanordnung (20), angeordnet zwischen der Stromquelle (R) und der Speicheranordnung (30), zur Umwandlung eines elektrischen Stroms (i) im Durchlauf zwischen der Stromquelle (R) und der Speicheranordnung (30),
**dadurch gekennzeichnet, dass** die Umwandlungsanordnung (20) Folgendes umfasst:
- eine dreiphasige Vektormaschine (50) mit variabler Frequenz, bestehend aus einem Treiber zur Vektorsteuerung sensorloser feldorientierter Motoren, der eine an Kondensatoren (514) angeschlossene Transistorbrücke (513) umfasst, wobei die dreiphasige Vektormaschine (50) mit variabler Frequenz konfiguriert ist, um den elektrischen Strom (i), der zwischen der Stromquelle (R) und der Speicheranordnung (30) zirkuliert, bidirektional umzuwandeln, wobei sie wahlweise Wirkleistung, induktive Blindleistung und kapazitive Blindleistung abgibt oder absorbiert;
- eine Filteranordnung (21), angeordnet zwischen der dreiphasigen Vektormaschine (50) und der Stromquelle (R), zur Oberwellenverwaltung, wobei die Filteranordnung (21) hintereinander, von der Stromquelle (R) zur dreiphasigen Vektormaschine (50), Folgendes umfasst: einen dreiphasigen Tiefpassfilter (212) vom EMI-Typ, eine Leitungsdrossel (213) und einen Sinusfilter (214), wobei der Sinusfilter (214) konfiguriert ist, um bei der Schaltfrequenz der dreiphasigen Vektormaschine (50) mitzuschwingen;
- ein elektronisches Steuerungssystem (60), konfiguriert, um mindestens die dreiphasige Vektormaschine (50) zu steuern, um einen oder mehrere elektrische Parameter des elektrischen Stroms (i) als Funktion eines oder mehrerer elektrischer Parameter zu verändern, die von einer Vielzahl von Detektionsvorrichtungen (71, 72) erfasst werden, welche funktionell mit dem elektronischen Steuerungssystem (60) verbunden sind;
wobei mindestens die Speicheranordnung (30), die Umwandlungsanordnung (20) und mindestens eine der Detektionsvorrichtungen (72) mittels einer bidirektionalen Verbindungsvorrichtung (40) für die Übertragung von elektrischem Strom (i) und von Daten funktionell verbunden sind.

2. Das Energiespeichersystem (10) gemäß Anspruch 1 oder 2, **dadurch gekennzeichnet, dass** die bidirektionale Verbindungsvorrichtung (40) einen Gleichstrombus für die Übertragung von Strom und Daten mittels Stromnetz-Kommunikation umfasst.

3. Das Energiespeichersystem gemäß einem oder mehreren der obigen Ansprüche, **dadurch gekennzeichnet, dass** es in zwei Zuständen konfiguriert sein kann:
- einem Netzzustand, in dem die Stromquelle (R) ein elektrisches Verteilernetz ist, das auch in der Lage ist, elektrischen Strom aufzunehmen, und in dem die dreiphasige Vektormaschine (50) konfiguriert ist, um den elektrischen Strom (i), der zwischen der Stromquelle (R) und der bidirektionalen Verbindungsvorrichtung (40) fließt, bidirektional umzuwandeln;
- einem netzunabhängigen Zustand, in dem die Stromquelle (R) nicht in der Lage ist, Strom aufzunehmen, und in dem die dreiphasige Vektormaschine (50) konfiguriert ist, um den elektrischen Strom (i), der von der Stromquelle (R) zu der bidirektionalen Verbindungsvorrichtung (40) fließt, unidirektional umzuwandeln;
wobei der Übergang von dem Netzzustand zu dem netzunabhängigen Zustand und umgekehrt von dem elektronischen Steuersystem (60) in Abhängigkeit von einem oder mehreren elektrischen Parametern ermöglicht wird, die von einer oder mehreren der Detektionsvorrichtungen (71, 72) erfasst werden.

4. Das Energiespeichersystem (10) gemäß einem oder mehreren der obigen Ansprüche, **dadurch gekennzeichnet, dass** die bidirektionale Verbindungsvorrichtung (40) einen bidirektionalen Gleichstromumrichter (41) umfasst, um die Spannung des Stroms zu verändern, der zwischen der Umwandlungsanordnung (20) und der Speicheranordnung (30) zirkuliert.

5. Das Energiespeichersystem (10) gemäß einem oder mehreren der obigen Ansprüche, **dadurch gekennzeichnet, dass** es eine oder mehrere primäre zusätzliche Umwandlungsanordnungen (53, 54) umfasst, die funktionell mit der Speicheranordnung (30) verbunden und ausgebildet sind, um mit einem oder mehreren Anwendergeräten (U1, U2) verbunden zu werden; wobei jede der primären zusätzlichen Umwandlungsanordnungen (53, 54) eine dreiphasige Vektormaschine (503, 504) von der Art eines Antriebs für die Vektorsteuerung sensorloser feldorientierter Motoren umfasst, die eine Schaltbrücke mit aktiven Halbleitern umfasst, ausgebildet, um einen elektrischen Strom (i"', iʺʺ), der von der Speicheranordnung zu den Anwendergeräten (U1, U2) zirkuliert, umzuwandeln.

6. Das Energiespeichersystem (10) gemäß einem oder mehreren der obigen Ansprüche, **dadurch gekennzeichnet, dass** es eine oder mehrere sekundäre zusätzliche Umwandlungsanordnungen (51, 52) umfasst, die funktionell über die bidirektionale Verbindungsvorrichtung (40) mit der Umwandlungsanordnung (20) und mit der Speicheranordnung (30) verbunden sind, ausgebildet, um mit einem oder mehreren lokalen Stromgeneratoren (G1, G2) verbunden zu werden; wobei jede der sekundären zusätzlichen Umwandlungsanordnungen (51, 52) eine dreiphasige Vektormaschine umfasst, die ausgebildet ist, um einen elektrischen Strom (i', i"), der von den lokalen Stromgeneratoren (G1, G2) zu der bidirektionalen Verbindungsvorrichtung (40) zirkuliert, umzuwandeln.

7. Das Energiespeichersystem (10) gemäß einem oder mehreren der obigen Ansprüche, **dadurch gekennzeichnet, dass** die dreiphasige Vektormaschine (50) in einem schachtelähnlichen Körper untergebracht ist und das elektronische Steuerungssystem (60) eine elektronische Steuerung umfasst, die außerhalb des schachtelähnlichen Körpers liegt und mit diesem über ein Verbindungskabel verbunden ist; wobei sowohl die externe Steuerung als auch der schachtelähnliche Körper einen Teil des elektronischen Steuerungssystems (60) umfassen, das konfiguriert ist, um mindestens die dreiphasige Vektormaschine (50) autonom zu steuern.

8. Das Energiespeichersystem (10) gemäß einem oder mehreren der obigen Ansprüche, **dadurch gekennzeichnet, dass** die Vielzahl von Detektionsvorrichtungen (71, 72) einen digitalen Leistungsmesser (71) umfasst, der sich zwischen der dreiphasigen Vektormaschine (50) und der Stromquelle (R) befindet, um den Strom (i) zu überwachen, der zwischen der dreiphasigen Vektormaschine (50) und der Stromquelle (R) fließt.

9. Das Energiespeichersystem (10) gemäß einem oder mehreren der obigen Ansprüche, **dadurch gekennzeichnet, dass** die Funktionsverbindungen von und zu dem elektronischen Steuerungssystem (60) mit dem EtherCAT-Protokoll ausgestattet sind.

## Revendications

1. Système de stockage d'énergie (10), pouvant être raccordé à une source de fourniture de puissance (R) pour la fourniture de puissance électrique et comportant :
- un ensemble de stockage (30) pour stocker au moins une partie de la puissance fournie par ladite source de fourniture de puissance (R) et comportant au moins une unité de stockage de charge électrique (31) et
- un ensemble de conversion (20), intercalé entre ladite source de fourniture de puissance (R) et ledit ensemble de stockage (30), pour la conversion d'un courant électrique (i) en transit entre ladite source de fourniture de puissance (R) et ledit ensemble de stockage (30),
**caractérisé en ce que** ledit ensemble de conversion (20) comporte :
- une machine vectorielle triphasée à fréquence variable (50) constituée d'un pilote pour la commande vectorielle de moteurs à champ orienté sans capteur qui comporte un pont de transistors (513) relié à des condensateurs (514), ladite machine vectorielle triphasée à fréquence variable (50) étant configurée pour convertir de manière bidirectionnelle le courant électrique (i) qui circule entre ladite source de fourniture de puissance (R) et ledit ensemble de stockage (30), en délivrant et en absorbant sélectivement de la puissance active, de la puissance réactive inductive et de la puissance réactive capacitive,
- un ensemble de filtres (21), agencé entre la machine vectorielle triphasée (50) et la source de fourniture de puissance (R), pour la gestion des harmoniques, ledit ensemble de filtres (21) comportant, en série, depuis la source de fourniture de puissance (R) vers la machine vectorielle triphasée (50) : un filtre passe-bas triphasé (212) du type EMI, une self de ligne (213) et un filtre sinusoïdal (214), ledit filtre sinusoïdal (214) étant configuré pour entrer en résonance à la fréquence de commutation de la machine vectorielle triphasée (50),
- un système de commande électronique (60), configuré pour commander au moins ladite machine vectorielle triphasée (50) afin de faire varier un ou plusieurs paramètres électriques dudit courant électrique (i), en fonction d'un ou plusieurs paramètres électriques détectés par une pluralité de dispositifs de détection (71, 72) fonctionnellement reliés audit système de commande électronique (60),
au moins ledit ensemble de stockage (30), ledit ensemble de conversion (20) et au moins un desdits dispositifs de détection (72) étant fonctionnellement relié au moyen d'un appareil de liaison bidirectionnelle (40) pour le passage de courant électrique (i) et de données.

2. Système de stockage d'énergie (10) selon la revendication 1 ou 2, **caractérisé en ce que** ledit appareil de liaison bidirectionnelle (40) comporte un bus de courant continu pour le flux de courant et de données au moyen de la technique des courants porteurs en ligne.

3. Système de stockage d'énergie selon une ou plusieurs des revendications précédentes, **caractérisé en ce qu'**il peut être configuré dans deux états :
- un état en réseau, dans lequel la source de fourniture de puissance (R) est un réseau de distribution électrique qui est également capable d'absorber de la puissance électrique et dans lequel ladite machine vectorielle triphasée (50) est configurée pour convertir de manière bidirectionnelle le courant électrique (i) en transit entre ladite source de fourniture de puissance (R) et ledit appareil de liaison bidirectionnelle (40),
- un état hors réseau, dans lequel ladite source de fourniture de puissance (R) n'est pas capable d'absorber de puissance et dans lequel ladite machine vectorielle triphasée (50) est configurée pour convertir de manière unidirectionnelle le courant électrique (i) en transit depuis ladite source de fourniture de puissance (R) vers ledit appareil de liaison bidirectionnelle (40),
la transition dudit état en réseau audit état hors réseau et vice versa étant assurée par ledit système de commande électronique (60) en fonction d'un ou plusieurs paramètres électriques détectés par un ou plusieurs desdits dispositifs de détection (71, 72).

4. Système de stockage d'énergie (10) selon une ou plusieurs des revendications précédentes, **caractérisé en ce que** ledit appareil de liaison bidirectionnelle (40) comporte un convertisseur continu/continu bidirectionnel (41) pour faire varier la tension du courant qui circule entre l'ensemble de conversion (20) et l'ensemble de stockage (30).

5. Système de stockage d'énergie (10) selon une ou plusieurs des revendications précédentes, **caractérisé en ce qu'**il comporte un ou plusieurs ensembles de conversion auxiliaires primaires (53, 54), qui sont fonctionnellement reliés audit ensemble de stockage (30) et sont adaptés pour être reliés à un ou plusieurs dispositifs utilisateurs (U1, U2), chacun desdits ensembles de conversion auxiliaires primaires (53, 54) comportant une machine vectorielle triphasée (503, 504) du type d'un pilote pour la commande vectorielle de moteurs à champ orienté sans capteur qui comporte un pont de commutation avec des semi-conducteurs actifs, configuré pour convertir un courant électrique (i‴, iʺʺ) qui circule depuis ledit ensemble de stockage vers lesdits dispositifs utilisateurs (U1, U2).

6. Système de stockage d'énergie (10) selon une ou plusieurs des revendications précédentes, **caractérisé en ce qu'**il comporte un ou plusieurs ensembles de conversion auxiliaires secondaires (51, 52), fonctionnellement reliés audit ensemble de conversion (20) et audit ensemble de stockage (30) au moyen dudit appareil de liaison bidirectionnelle (40), adapté pour être relié à un ou plusieurs générateurs de puissance locaux (G1, G2), chacun desdits ensembles de conversion auxiliaires secondaires (51, 52) comportant une machine vectorielle triphasée, qui est configurée pour convertir un courant électrique (i', i") qui circule depuis lesdits générateurs de puissance locaux (G1, G2) vers ledit appareil de liaison bidirectionnelle (40).

7. Système de stockage d'énergie (10) selon une ou plusieurs des revendications précédentes, **caractérisé en ce que** ladite machine vectorielle triphasée (50) est reçue dans un corps analogue à un boîtier et ledit système de commande électronique (60) comporte une commande électronique qui est externe audit corps analogue à un boîtier et est reliée audit corps analogue à un boîtier au moyen d'un câble de raccordement, ladite commande externe et ledit corps analogue à un boîtier comportant tous deux chacun une partie dudit système de commande électronique (60) configurée pour commander au moins la machine vectorielle triphasée (50) de manière autonome.

8. Système de stockage d'énergie (10) selon une ou plusieurs des revendications précédentes, **caractérisé en ce que** ladite pluralité de dispositifs de détection (71, 72) comporte un wattmètre numérique (71) qui est situé entre ladite machine vectorielle triphasée (50) et ladite source de fourniture de puissance (R) afin de surveiller le courant (i) en transit entre ladite machine vectorielle triphasée (50) et ladite source de fourniture de puissance (R).

9. Système de stockage d'énergie (10) selon une ou plusieurs des revendications précédentes, **caractérisé en ce que** les liaisons fonctionnelles depuis et vers ledit système de commande électronique (60) sont établies avec le protocole EtherCAT.
